# EUROPEAN PATENT APPLICATION

(11) **EP 4 279 555 A1**
(43) Date of publication of application: **22.11.2023**
(21) Application number: 22305739.9
(22) Date of filing: 19.05.2022
(51) Int. Cl.: C09D 171/00, C09D 175/04, C09J 171/00, C09J 175/04

(54) **MOISTURE CURABLE COMPOSITION**

(71) Applicant: Bostik SA, 92700 Colombes (FR)
(72) Inventor: QIU, Ziwen, 201108 Shanghai (CN); CAO, Yichen, 201108 Shanghai (CN)
(74) Representative: Arkema Patent

(57) **Abstract**

The invention relates to a moisture curable composition, comprising: at least one silyl-modified polymer (A); at least one organofunctional silane compound (B) possessing at least one amino group and a hydrolysable silyl group; and at least one flame retardant component (C) comprising a halogen-free nitrogen-phosphorous flame retardant. The invention further relates to the use of said moisture curable composition as a sealant, as an adhesive or as a coating, as well as an article comprising at least one layer obtained by curing said moisture curable composition.

## Description

### TECHNICAL FIELD

The present invention relates to a moisture curable composition. The present invention also relates to the use of said moisture curable composition as a sealant, as an adhesive or as a coating, as well as an article comprising at least one layer obtained by curing said moisture curable composition.

### TECHNICAL BACKGROUND

Sealing (or sealant or caulk) compositions are widely used in the construction field. They are implemented to assemble substrates, for example made of concrete, via expansion joints. In such a use, they make it possible, by virtue of their mechanical and in particular elastic properties, to obtain a joint, which is stable to the dimensional variations brought about by changes in temperature. Sealant compositions may also be used for the adhesive bonding of floor coverings, in particular of wooden floors.

Generally packaged, for the purpose of manual use, in cartridges provided with a nozzle at one end, sealant compositions are applied after having placed said cartridge in a gun. The handling by the operator of the gun trigger actuates a piston, which extrudes the sealant, through the nozzle, on one of the substrates to be assembled and/or introduces it into the gap between the two substrates to be joined.

Sealant compositions comprise a moisture-crosslinkable prepolymer, the chemical structure of which has, generally terminal, isocyanate or alkoxysilyl reactive groups.

After the extrusion of the sealant on a substrate for making an assembly and/or into the gap between the two substrates to be filled in, these reactive groups undergo a crosslinking or curing reaction with the water which comes from the air moisture or from the substrate moisture. This reaction results in the creation of a solid three-dimensional polymeric network including for instance siloxane bonds, which forms an adhesive joint between the two substrates.

Within the industrial field, such as the transport and construction industries, silylated sealing compositions in particular are known.

In the transport industry, extremely good flame retardant performance of the sealing is required especially for trains and high speed trains. For example, in rail areas, there are various fire safety standards to ensure the safety of people and equipment in railway applications. In such standards, different parts assembled in train compartments are required to have extreme oxygen indices in accordance to different fire safety levels.

Among traditional flame retardant compositions, halogen-free flame retardants are increasingly replacing toxic halogenated flame retardants because of stringent regulations against use of the latter for environmental and health concerns. However, halogen-free flame retardants are inferior in flame retardant performance to halogenated flame retardants, and it is very difficult to achieve high flame retardant requirements, especially a high oxygen index.

For example, organophosphorus and phosphorus-nitrogen flame retardants are known as very effective halogen-free flame retardants which possess high thermal stability with low loadings compared to other types of halogen-free flame retardants. However, such flame retardants still suffer from insuperable defects when used in adhesive or sealant systems. For example, flame retardants containing phosphorus are a kind of acid compounds with low pH values due to the use of phosphoric acids in its synthesis and process. As the phosphorus content in flame retardants is one of the critical factors governing their flame retardancy, low pH values are essential to maintain good flame retardant performance of such phosphorus-based flame retardants. On the other hand, many adhesive or sealant systems commonly used require alkaline conditions for curing, such as a two-component (2K) epoxy system, a polyurethane system which generally uses amine as reaction catalysts, and silyl-modified polymers and its compounded adhesives or sealants. Therefore, using acid flame retardant compositions in such adhesive or sealant systems would slow or even block the curing reaction, that would also weaken mechanical properties of cured adhesives or sealants.

Document US2008/0241529 relates to flameproofed adhesive and sealing materials containing 0.1-99.9% by weight of adhesive or thermoplastic polymer and 0.1 -99.9% by weight of flameproofing agent, wherein the flameproofing agent contains at least one phosphinic acid salt and/or one diphosphinic acid salt.

Document EP3878909 relates to a moisture curable silylated composition comprising from 35 to 65% by weight of a polymer (A) comprising at least 2 alkoxysilyl terminal groups; from 2.5 to 12% by weight of a polymer (B) comprising at least 2 alkoxysilyl terminal groups; and from 7.5 to 28% by weight of an alkoxy modified silsesquioxane (C). The moisture curable silylated composition also comprises, as a fire retardant, a phosphate ester or a derivative of a phosphate ester, such as the tris(2-ethylhexyl) phosphate, in a weight amount ranging from 10 to 20%.

Document CN102203186A relates to a flame retardant polyurethane composition comprising (a) a thermoplastic polyurethane-based resin component, (b) a phosphorus flame retardant particulate filler, and (c) a low melting temperature phosphorus flame retardant.

Document CN103333653A relates to an antiflaming one-component modified silane (MS) polyether sealant and a preparation method thereof. The sealant comprises an MS premix compound, a cross-linking agent, a coupling agent and a catalyst. The MS premix compound consists of MS-polymer resin, a plasticizer, antiflaming packing, reinforcement packing, a thixotropic agent and a performance assistant. The flame-retardant filler is aluminum hydroxide, magnesium hydroxide, antimony trioxide, zinc borate, zinc carbonate, melamine cyanurate, chloroplatinic acid, platinum complex, benzotriazole, melamine salt or a combination thereof.

Other flame retardant one-component silane modified polyether sealants are known from documents CN102660214A, CN103320079A and CN105255431A.

There is still a need for a moisture curable adhesive or sealant composition that can provide good flame retardant properties without compromising the curing speed or efficiency, and thus mechanical properties of the adhesives/sealants.

### SUMMARY OF THE INVENTION

It is a first object of the invention to provide a moisture curable composition, comprising:
- at least one silyl-modified polymer (A);
- at least one organofunctional silane compound (B) possessing at least one amino group and a hydrolysable silyl group; and
- at least one flame retardant component (C) comprising a halogen-free nitrogen-phosphorous flame retardant.

According to some embodiments, the moisture curable composition comprises:
- from 30 to 60 parts by mass of the silyl-modified polymer (A);
- from 0.2 to 3 parts by mass of the organofunctional silane compound (B); and
- from 20 to 50 parts by mass of the flame retardant component (C).

According to some embodiments, the halogen-free nitrogen-phosphorous flame retardant comprises one or more selected from piperazine polyphosphate (PAPP), piperazine phosphate, melamine polyphosphate (MPP), melamine cyanurate (MCA), and ammonium polyphosphate (APP), preferably, the halogen-free nitrogen-phosphorous flame retardant comprises PAPP. Preferably PAPP comprises or is piperazine pyrophosphate.

According to some embodiments, the flame retardant component (C) comprises from 25 to 100% by mass of piperazine polyphosphate (PAPP) and 0 to 75% by mass of at least one flame retardant other than PAPP, based on the total weight of the flame retardant component (C).

According to some embodiments, the at least one flame retardant other than PAPP is a nitrogen-phosphorous flame retardant, a nitrogen flame retardant, phosphorous flame retardant, a metal oxide flame retardant, a metal hydroxide flame retardant, or a combination thereof.

According to some embodiments, the organofunctional silane compound (B) possesses two or more amino groups.

According to some embodiments, the hydrolysable silyl group of the organofunctional silane compound (B) is of formula -SiXYZ wherein X, Y and Z are independently selected from hydrogen, C₁-C₈ alkyl groups, and C₁-C₈ alkoxy groups, at least one of X, Y and Z being a hydrolysable group.

According to some embodiments, the hydrolysable group for at least one of X, Y and Z is a C₁ to C₈ alkoxy group.

According to some embodiments, the organofunctional silane compound (B) is of formula XYZSi-A-NH-(B-NH)_{z}-H, z being an integer from 0 to 4 and A and B being alkyl divalent radicals.

According to some embodiments, the organofunctional silane compound (B) comprises an amino alkyl alkoxysilane selected from the group consisting of:
3-(trimethoxysilyl)propylamine having the following formula: 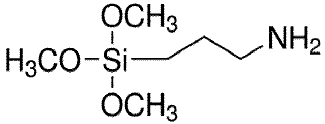
[3-(2-aminoethylamino)propyl]trimethoxysilane having the following formula: 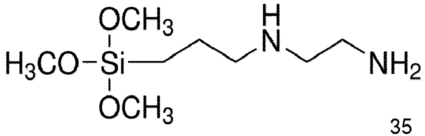 , and
3-[2-(2-aminoethylamino)ethylamino]propyltrimethoxysilane having the following formula:

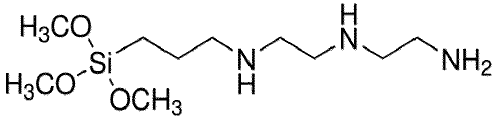

According to some embodiments, the silyl-modified polymer (A) comprises one or more selected from a silyl-modified polyether, a silyl-modified polyurethane.

According to some embodiments, the moisture curable composition further comprises a curing catalyst (D).

According to some embodiments, the moisture curable composition further comprises at least one additive selected from the group consisting of solvents, pigments, dyes, adhesion promoters, drying agents, molecular sieves, antioxidant, wetting-agents, UV absorber, reactive diluent, thixotropic agents, fillers, plasticizers, and mixtures thereof.

It is a second object of the invention to use the moisture curable composition described above, as a sealant, as an adhesive for bonding two substrates together, or as a coating on a surface of a substrate.

It is a further object of the invention to provide an article comprising at least one layer obtained by curing the moisture curable composition described above.

The present invention makes it possible to address the need mentioned above. In particular, the invention provides a moisture curable composition that can provide good flame retardant properties without compromising the curing speed and mechanical properties of the cured composition.

This is achieved by the combination of at least one organofunctional silane compound possessing at least one amino group and a hydrolysable silyl group and at least one flame retardant component comprising a halogen-free nitrogen-phosphorous flame retardant in the moisture curable composition. More particularly, such combination makes it possible to overcome the above-mentioned slow-curing problem traditionally encountered in moisture curable compositions comprising at least one silyl-modified polymer and a flame retardant.

Further, as the at least one flame retardant component comprises a halogen-free nitrogen-phosphorous flame retardant, it is less toxic with low smoke emission, and provides an excellent performance with high thermal stability and low loadings. Thus, the present invention provides a moisture curable composition which is favorable for environment and health concerns and which provides good flame retardancy and mechanical properties.

### DESCRIPTION OF EMBODIMENTS

The invention will now be described in more detail without limitation in the following description.

### Component (A)

The moisture curable composition according to the invention comprises at least one silyl-modified polymer (A).

With *"silyl-modified polymers"* or *"SMP"* is meant in the present application (unless stated otherwise): polymers that have been modified with reactive silyl groups, preferably at the termini (= ends) of the backbone or at the termini of any side branches. In other words, reactive silyl groups have been attached to the polymer chain. These SMPs cross-link to each other via hydrolysis and condensation reactions to form a three dimensional elastic polymer network. The term *"silylated polymer"* is also used in this respect and has a similar meaning. It means that silyl groups have been attached to the polymer.

With *"reactive silyl group"* is meant in the present application (unless stated otherwise): a silicon-containing chemical group that is capable of hydrolyzing in the presence of moisture to form siloxane linkages. In other words: a water-reactive group containing a silicon atom that is capable of forming siloxane bonds with another reactive silyl group. Other terms that are used and have approximately the same meaning are: *"silyl containing functional groups"* or *"silicon containing functional group"* or *"reactive silicon group".*

According to an embodiment, the silyl-modified polymer (A) comprises at least one group, preferably at least two groups, having the following formula (I):

-Si(R⁴)ₚ(OR⁵)₃₋ₚ (I)

where:
- R⁴ represents a linear or branched alkyl radical comprising from 1 to 4 carbon atoms, with the possibility that when there are several radicals R⁴, these radicals are identical or different;
- R⁵ represents a linear or branched alkyl radical comprising from 1 to 4 carbon atoms, with the possibility that when there are several radicals R⁵, these radicals are identical or different, with the possibility that two groups OR⁵ may be engaged in the same ring;
- p is an integer equal to 0, 1 or 2, preferably equal to 0 or 1.

The silyl-modified polymer (A) as defined above comprises at least one crosslinkable alkoxysilane group. The crosslinkable alkoxysilane group is preferably in the terminal position of said polymer. A position in the middle of the chain is, however, not excluded. The silyl-modified polymer is not crosslinked before the application of the moisture curable composition. The moisture curable composition is applied under conditions that enable the crosslinking thereof.

The silyl-modified polymer (A) is generally in the form of a more or less viscous liquid. Preferably, the silyl-modified polymer has a viscosity ranging from 10 to 200 Pa·s, preferably ranging from 20 to 175 Pa·s, said viscosity being measured, for example, according to a Brookfield-type method at 23°C and 50% relative humidity (S28 needle).

The silyl-modified polymer (A) preferably comprises two groups of formula (I), but it may also comprise from three to six groups of formula (I).

Preferably, the silyl-modified polymer(s) (A) have a number-average molar mass (Mn) ranging from 500 to 50 000 g/mol, more preferably ranging from 700 to 20 000 g/mol. The number-average molar mass (Mn) of the polymers may be measured by methods well known to a person skilled in the art, for example by NMR and size exclusion chromatography using polystyrene standards.

According to an embodiment, the silyl-modified polymer (A) corresponds to one of the formulae (II), (III) or (IV): 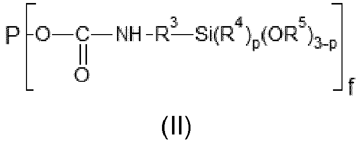 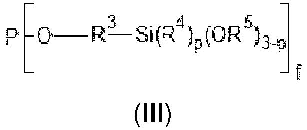 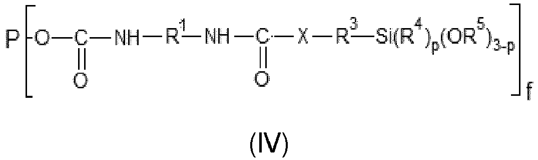 in which:
R⁴, R⁵ and p have the same meaning as in formula (I) described above,
P represents a saturated or unsaturated, linear or branched polymeric radical optionally comprising one or more heteroatoms, such as oxygen, nitrogen, sulfur or silicon, and preferably having a number-average molar mass (Mn) ranging from 100 g/mol to 48 600 g/mol, more particularly from 300 g/mol to 18 600 g/mol or from 500 g/mol to 12 600 g/mol,
R¹ represents a divalent hydrocarbon-based radical comprising from 5 to 15 carbon atoms, which may be aromatic or aliphatic, linear, branched or cyclic,
R³ represents a linear or branched divalent alkylene radical comprising from 1 to 6 carbon atoms, preferably from 1 to 3 carbon atoms,
X represents a divalent radical chosen from -NH-, -NR⁶- or -S-,
R⁶ represents a linear or branched alkyl radical comprising from 1 to 20 carbon atoms and which may also comprise one or more heteroatoms,
f is an integer ranging from 1 to 6, preferably ranging from 2 to 5, preferably from 2 to 4, more preferably from 2 to 3.

Preferably, in formulae (II), (III) and/or (IV) above, P represents a polymer radical chosen, in a nonlimiting manner, from polyethers, polycarbonates, polyesters, polyolefins, polyacrylates, polyether polyurethanes, polyester polyurethanes, polyolefin polyurethanes, polyacrylate polyurethanes, polycarbonate polyurethanes, and block polyether/polyester polyurethanes.

For example, EP 2468783 describes silyl-modified polymers of formula (II) in which P represents a polymeric radical containing polyurethane / polyester / polyether blocks.

According to an embodiment, the silyl-modified polymer (A) is selected from a silyl-modified polyether, a silyl-modified polyurethane, and mixtures thereof.

According to a particular embodiment, the silyl-modified polymer (A) corresponds to one of the formulae (II'), (III') or (IV'): 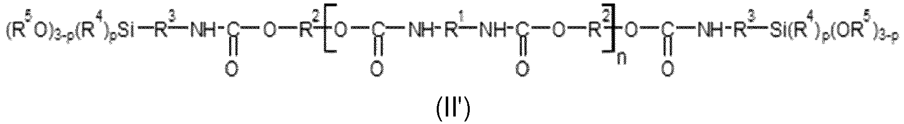 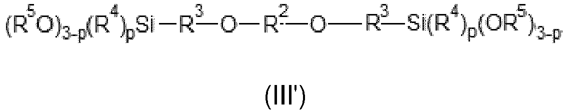 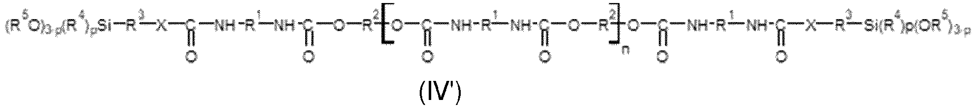 in which formulae (II'), (III') and (IV'):
R¹, R³, R⁴, R⁵, X, R⁶ and p have the same meaning as in formulae (II), (III) and (IV) described above,
R² represents a saturated or unsaturated, linear or branched divalent hydrocarbon-based radical optionally comprising one or more heteroatoms, such as oxygen, nitrogen, sulfur or silicon, and preferably having a number-average molar mass (Mn) ranging from 100 g/mol to 48 600 g/mol, more particularly from 300 g/mol to 18 600 g/mol or from 500 g/mol to 12 600 g/mol,
n is an integer greater than or equal to 0.

In the silyl-modified polymers of formulae (II'), (III') or (IV') defined above, when the radical R² comprises one or more heteroatoms, said heteroatom(s) are not present at the end of the chain. In other words, the free valencies of the divalent radical R² bonded to the oxygen atoms neighboring the silyl-modified polymer each originate from a carbon atom. Thus, the main chain of the radical R² is terminated with a carbon atom at each of the two ends, said carbon atom then having a free valency.

According to an embodiment, the silyl-modified polymer (A) is obtained from polyols chosen from polyether polyols, polyester polyols, polycarbonate polyols, polyacrylate polyols, polysiloxane polyols and polyolefin polyols, and mixtures thereof, and more preferably from diols chosen from polyether diols, polyester diols, polycarbonate diols, polyacrylate diols, polysiloxane diols, polyolefin diols, and mixtures thereof. In the case of the polymers of formula (II'), (III') or (IV') described above, such diols may be represented by the formula HO-R²-OH where R² has the same meaning as in formula (II'), (III') or (IV').

For example, among the radicals of the type R² which may be present in formula (II'), (III') or (IV'), mention may be made of the following divalent radicals, of which the formulae below show the two free valencies:
derivative of a polypropylene glycol: 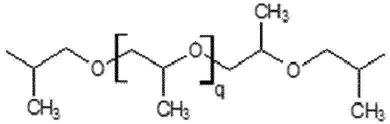
derivative of a polyester diol: 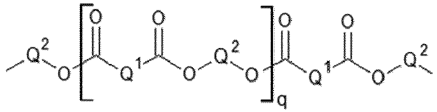
derivative of a polybutadiene diol: 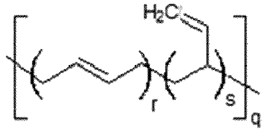
derivative of a polyacrylate diol: 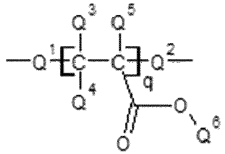
derivative of a polysiloxane diol: 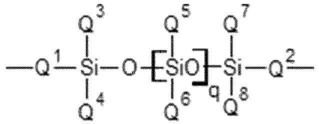
in which:
q represents an integer such that the number-average molecular mass (Mn) of the radical R² ranges from 100 g/mol to 48 600 g/mol, preferably from 300 g/mol to 18 600 g/mol, more preferably from 500 g/mol to 12 600 g/mol,
r and s represent zero or a non-zero integer such that the number-average molecular mass (Mn) of the radical R² ranges from 100 g/mol to 48 600 g/mol, preferably from 300 g/mol to 18 600 g/mol, more preferably from 500 g/mol to 12 600 g/mol, it being understood that the sum r+s is other than zero,
Q¹ represents a linear or branched, saturated or unsaturated aromatic or aliphatic divalent alkylene radical preferably containing from 1 to 18 carbon atoms, more preferably from 1 to 8 carbon atoms,
Q² represents a linear or branched divalent alkylene radical preferably containing from 2 to 36 carbon atoms, more preferably from 1 to 8 carbon atoms,
Q³, Q⁴, Q⁵, Q⁶, Q⁷ and Q⁸, represent, independently of each other, a hydrogen atom or an alkyl, alkenyl or aromatic radical preferably containing from 1 to 12 carbon atoms, preferably from 2 to 12 carbon atoms, more preferably from 2 to 8 carbon atoms.

According to one embodiment, R¹ is chosen from one of the following divalent radicals, of which the formulae below show the two free valencies:
a) the divalent radical derived from isophorone diisocyanate (IPDI): 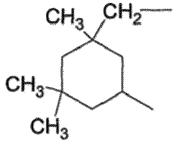
b) the divalent radical derived from dicyclohexylmethane diisocyanate (H12MDI): 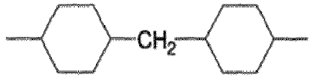
c) the divalent radical derived from toluene diisocyanate (TDI): 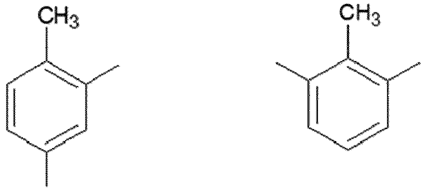
d) the divalent radicals derived from the 4,4' and 2,4' isomers of diphenylmethane diisocyanate (MDI): 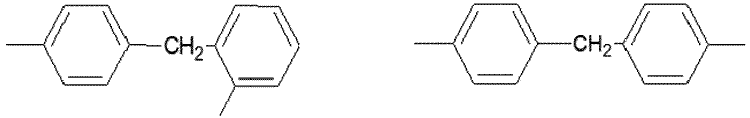
e) the divalent radical derived from hexamethylene diisocyanate (HDI):

   -(CH2)6-
f) the divalent radical derived from m-xylylene diisocyanate (m-XDI):

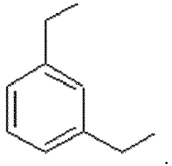

The polymers of formula (II) or (II') may be obtained according to a process described in EP 2336208 and WO 2009/106699. A person skilled in the art will know how to adapt the manufacturing process described in these two documents in the case of the use of different types of polyols. Among the polymers corresponding to formula (II), mention may be made of:
GENIOSIL^{®} STP-E10 (available from WACKER): polyether comprising two groups (I) of dimethoxy type (n equal to 0, p equal to 1 and R⁴ and R⁵ represent a methyl group) having a number-average molar mass (Mn) of 8 889 g/mol where R³ represents a methylene group;
GENIOSIL^{®} STP-E30 (available from WACKER): polyether comprising two groups (I) of dimethoxy type (n equal to 0, p equal to 1 and R⁴ and R⁵ represent a methyl group) having a number-average molar mass (Mn) of 14 493 g/mol where R³ represents a methylene group;
SPUR+^{®} 1050 MM (available from MOMENTIVE): polyurethane comprising two groups (I) of trimethoxy type (n other than 0, p equal to 0 and R⁵ represents a methyl group) having a number-average molar mass (Mn) of 16 393 g/mol where R³ represents an n-propyl group;
SPUR+^{®} Y-19116 (available from MOMENTIVE): polyurethane comprising two groups (I) of trimethoxy type (n other than 0 and R⁵ represents a methyl group) having a number-average molar mass (Mn) ranging from 15 000 to 17 000 g/mol g/mol where R³ represents an n-propyl group;
DESMOSEAL^{®} S XP 2636 (available from BAYER): polyurethane comprising two groups (I) of trimethoxy type (n other than 0, p equal to 0 and R⁵ represents a methyl group) having a number-average molar mass (Mn) of 15 038 g/mol where R³ represents an n-propylene group;
SILQUEST^{®} 1012LM (available from MOMENTIVE) corresponding to polyurethane comprising two groups (I) of trimethoxy type (n other than 0, p equal to 0 and R⁵ represents a methyl group).

The polymers of formula (III) or (III') may be obtained by hydrosilylation of polyether diallyl ether according to a process described, for example, in EP 1829928. Among the polymers corresponding to formula (III), mention may be made of:
the polymer MS SAX^{®} 350 (available from KANEKA) corresponding to a polyether comprising two groups (I) of dimethoxy type (p equal to 1 and R⁴ and R⁵ represent a methyl group) having a number-average molar mass (Mn) ranging from 14 000 to 16 000 g/mol;
the polymer MS SAX^{®} 260 (available from KANEKA) corresponding to a polyether comprising two groups (I) of dimethoxy type (p equal to 1, R⁴ and R⁵ represent a methyl group) having a number-average molar mass (Mn) of 16 000 to 18 000 g/mol where R³ represents an ethyl group;
the polymer MS S303H (available from KANEKA) corresponding to a polyether comprising two groups (I) of dimethoxy type (p is equal to 1 and R⁴ represents a methyl group) having a number-average molecular mass (Mn) of about 22 000 daltons.
the polymer SAX^{®} 725 (available from KANEKA) corresponding to a polyether comprising two groups (I) of dimethoxy type (p is equal to 1 and R⁴ represents a methyl group).

The polymers of formula (IV) or (IV') may be obtained, for example, by reaction of polyol(s) with one or more diisocyanates followed by a reaction with aminosilanes or mercaptosilanes. A process for preparing polymers of formula (IV) or (IV') is described in EP 2583988. A person skilled in the art will know how to adapt the manufacturing process described in said document in the case of using different types of polyols.

According to a preferred embodiment, the moisture curable composition according to the invention comprises at least one silyl-modified polymer of formula (II) and/or (II') or at least one silyl-modified polymer of formula (III) and/or (III').

According to a particularly preferred embodiment, the moisture curable composition according to the invention comprises at least one silyl-modified polymer of formula (III'), notably in which R² is a divalent radical derived from a polyether, preferably from a poly(oxyalkylene) diol and even more particularly from a polypropylene glycol. The crosslinking time of said adhesive composition is then lowered entirely advantageously.

The amount of silyl-modified polymer (A) in the moisture curable composition may depend on the use of said moisture curable composition. Specifically, for the use as a sealant, the moisture curable composition will preferably comprise from 5% to 50% by mass of the silyl-modified polymer, preferably from 10% to 40% by mass of the silyl-modified polymer, relative to the total of the moisture curable composition. For an adhesive used for the formulation of pressure-sensitive self-adhesive articles (of PSA type), the moisture curable composition will preferably comprise from 10% to 99.9% by mass, preferably from 15% to 90% by mass, more preferably from 20% to 80% by mass, of the silyl-modified polymer relative to the total of the moisture curable composition.

### Component (B)

The moisture curable composition according to the invention comprises at least one organofunctional silane compound (B) possessing at least one amino group and a hydrolysable silyl group.

In the present application, "amino group" is a nitrogen-containing group or organic structure that the nitrogen atom is connected by single bonds to either hydrogen or carbon. "Amino group" can be a primary, a secondary or a tertiary amino group.

According to an embodiment, the organofunctional silane compound (B) possesses two or more, preferably three amino groups. In some embodiments, the organofunctional silane compound (B) may be linear or branched.

By *"hydrolysable silyl group"* is meant a group which comprises one or more hydrolysable functional groups. According to an embodiment, the hydrolysable silyl group may be of formula -SiXYZ wherein X, Y and Z are independently selected from hydrogen, C₁-C₈ alkyl groups, C₁-C₈ alkoxy groups. At least one of the substituents X, Y, Z is a hydrolysable group. Preferably, at least two or all three of the substituents X, Y, Z are hydrolysable groups. Preferably, the hydrolysable group for at least one of substituents X, Y, Z is a C₁ to C₈ alkoxy group, more preferably a trialkoxy group. Preferably, the alkoxy is methoxy or ethoxy, thus the hydrolysable group is preferably a trimethoxy or triethoxy group.

According to an embodiment, the organofunctional silane compound (B) is of formula XYZSi-A-NH-(B-NH)_{z}-H, z being an integer from 0 to 4 and A and B being alkyl divalent radicals. Each alkyl divalent radical is preferably linear. Each alkyl divalent radical preferably comprises from 1 to 8 carbon atoms, more preferably from 1 to 4 carbon atoms, and even more preferably 2 or 3 carbon atoms. For example, A may be C₃H₆ and/or B may be C₂H₄.

According to an embodiment, the organofunctional silane compound (B) comprises an aminoalkyl alkoxysilane selected from the group consisting of:
3-(trimethoxysilyl)propylamine (AMMO) having the following formula: 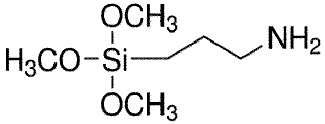 ,
[3-(2-aminoethylamino)propyl]trimethoxysilane (DAMO) having the following formula: 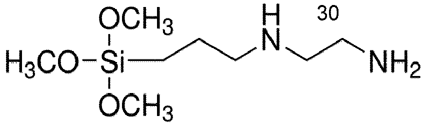 , and
3-[2-(2-aminoethylamino)ethylamino]propyltrimethoxysilane (TRIAMO) having the following formula:

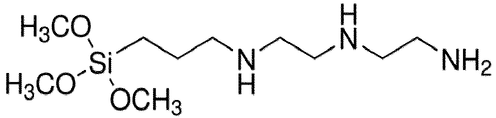

According to an embodiment, the organofunctional silane compound (B) comprises two or more selected from AMMO, DAMO and TRIAMO.

Preferably the organofunctional silane compound (B) comprises TRIAMO.

### Component (C)

The moisture curable composition of the present invention comprises at least one flame retardant component (C) comprising a halogen-free nitrogen-phosphorous flame retardant.

For the purpose of the present invention, *"halogen-free nitrogen-phosphorous flame retardant"* means a flame retardant which does not contain halogens (Fluorine, Chlorine, Bromine, Iodine, Astatine) and contains elements of nitrogen and phosphorus.

For the purpose of the present invention, *"flame retardant"* means a substance or a combination of substances that are applied to or included in material(s) to prevent the start or slow the growth of fire. A variety of different chemistries based on different properties and/or molecular structures of the substance(s) may act as the function of flame retardant. Basically, the flame retardant effect may be achieved by eliminating or reducing one or more factors of a cycle of fuel, heat and oxygen to break the cycle in the combustion process.

The flame retardancy mechanism may be physical and/or chemical. For example, the flame retardant effect may be based on an endothermic effect and/or a covering effect and/or a suffocation effect. In the endothermic effect, a flame retardant material absorbs a portion of the heat released by the burning material to reduce the surface temperature of the burning material, thus reduces the smoke generation and prevents the fire from spreading. In the covering effect, a flame retardant material forms a stable foam layer covering a surface of the combustible material when burning, which isolates the surface of the combustible material from the air and prevents the combustion gas from escaping, thus prevents the further growth of fire. In the suffocation effect, a flame retardant material decomposes at a high temperature and releases non-combustible gas so that the concentration of combustible gas is reduced with the increase in volume of non-combustible gas, thus prevents the continuous combustion process.

The halogen-free nitrogen-phosphorus flame retardant is preferably an intumescent flame retardant which produces a layer of carbon-based foam when subjected to heating above a certain threshold. This intumescent carbonization layer has functions of heat insulation, oxygen insulation, and smoke suppression, thus blocking the combustion process. The intumescent flame retardant is environment-friendly as it does not produce toxic smoke or corrosive gases when burning, and does not require an antimony trioxide synergist which is commonly used with halogenated flame retardants. The combination of phosphorus and nitrogen within the flame retardant have been found to have a synergistic effect during the burning process, which can improve flame retardant effect.

Preferably, the intumescent flame retardant comprises three portions: an acid source, a carbon source (called "carbonific"), and a gas source (called "spumific"). A same compound can be used as more than one of the acid source, carbon source and gas source, possibly as all three. Alternatively, the acid source, carbon source and gas source can be provided by different compounds in combination.

The acid source plays the main role for flame retardancy and the carbonific and spumific are synergistic agents. The acid source is generally an inorganic acid, or a compound that can form an inorganic acid after being heated to a certain temperature, such as phosphoric acid, phosphorus oxychloride, and ammonium polyphosphate (APP). The carbonific serves as a dehydrating agent or a carbonization accelerator for forming the carbonized layer of foam and may comprise a polyhydroxy compound preferably having a high carbon content, such as pentaerythritol, starch and triazine derivatives. The spumific may comprise, for example melamine, dicyandiamide, piperazine, and ethylenediamine.

According to an embodiment, the halogen-free nitrogen-phosphorous flame retardant comprises one or more selected from piperazine polyphosphate (PAPP), piperazine phosphate, melamine polyphosphate (MPP), melamine cyanurate (MCA), and ammonium polyphosphate (APP). Preferably, the halogen-free nitrogen-phosphorous flame retardant comprises PAPP.

In this patent application, "polyphosphate" is a chemical structure formed from tetrahedral PO₄ structural units linked together by sharing oxygen atoms. Polyphosphates can adopt linear or a cyclic ring structure. The repeating units of polyphosphate can be two or more. PAPP represents a group of compounds with different repeating units of polyphosphate.

PAPP can be prepared by a reaction between piperazine and a polyphosphoric acid or a polyphosphoric salt, e.g., pyrophosphoric acid. The mixing ratio of piperazine to the polyphosphoric acid is not particularly limited if the flame retardancy effect can be achieved. PAPP can also be obtained by heating and condensing piperazine orthophosphate. PAPP can be prepared as disclosed herein or purchased directly from market as there are commercially available PAPP products.

PAPP contains a piperazine part and a polyphosphate part. When there are two repeating units of PO₄ structure in PAPP, it is piperazine pyrophosphate represented by the following formula:

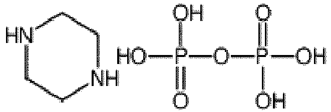

From the viewpoint of flame retardancy, ease of handling, and storage stability, it is preferable to use piperazine pyrophosphate in the flame retardant component (C) of the moisture curable composition according to the present invention. In the case where piperazine pyrophosphate is used in a mixture as the component (C), it is preferable that the mass-based content of piperazine pyrophosphate is the highest in the mixture.

PAPP combines an acid source, a carbon source and a gas source. It has excellent charcoal-forming and flame retardant properties.

The halogen-free nitrogen-phosphorous flame retardant, e.g., PAPP, MCA and MPP have been widely used in thermoplastic materials such as polypropylene (PP), polyethylene (PE), acrylonitrile-butadiene-styrene (ABS), epoxy resin (EP). However, the use of halogen-free nitrogen-phosphorous flame retardant in moisture curable composition for adhesive or coating has not been reported.

Ammonium polyphosphate (APP) is an acid source of another halogen-free intumescent flame retardant. PAPP-based flame retardants provide better flame retardancy and higher heat stability than APP-based flame retardants.

According to an embodiment, the flame retardant component (C) comprises from 25 to 100% by mass of PAPP and 0 to 75% by mass of at least one flame retardant other than PAPP, based on the total weight of the flame retardant component (C), preferably from 50 to 100% by mass of PAPP and from 0 to 50% by mass of at least one flame retardant other than PAPP, more preferably from 75 to 100% by mass of PAPP and from 0 to 25% by mass of at least one flame retardant other than PAPP.

According to an embodiment, the at least one flame retardant other than PAPP is any compound having flame retardant function other than PAPP, such as a nitrogen-phosphorous flame retardant, a nitrogen flame retardant, phosphorous flame retardant, a metal oxide flame retardant, a metal hydroxide flame retardant, or a combination thereof. Examples of metal oxide flame retardants include ZnO.

### Curing catalyst (D)

According to an embodiment, the moisture curable composition according to the invention may further comprise a curing catalyst (D).

The catalyst (D) may be any curing or cross-linking catalyst known to those skilled in the art for catalyzing the condensation of silanol. For example, the catalyst (D) may comprise amines or organometallic derivatives, and in particular organic derivatives of iron, titanium, aluminum, or divalent or tetravalent tin.

Examples of such catalysts include:
- aminosilanes such as N-(2-aminoethyl)-3-aminopropyltrimethoxysilane (commercially available under the name SILQUEST^{®} A-1120 from MOMENTIVE) or 3-aminopropyltrimethoxysilane,
- organic derivatives of titanium such as titanium acetyl acetonate (commercially available under the name TYZOR^{®} AA75 from Dorf Ketal),
- aluminum such as aluminum chelate (commercially available under the name K-KAT^{®} 5218 from KING INDUSTRIES),
- amines such as 1,8-diazabicyclo[5.4.0]undec-7-ene (DBU) or 1,5-diazabicyclo[4.3.0]non-5-ene (DBN), diethyl ether-2,2'-morpholine (DMDEE), 1,4-diazabicylo[2.2.2]octane (DABCO),
- tin-based catalysts such as TIB-KAT^{®} 216 (available from TIB CHEMICALS),
- catalysts based on dioctyl tin such as TEGOKAT^{®} 223 (available from Evonik),
- catalysts based on an ethyl acetoacetate titanium complex such as TYZOR^{®} 726 (available from Dorf Ketal),
- catalysts based on the reaction product of silicic acid (H₄SiO₄) tetraethyl ester with bis(acetyloxy)dioctylstannane (CAS Number : 93925-43-0) such as NEOSTANN^{®} S-1 (available from NITTO KASEI).

### Composition

According to an embodiment, the moisture curable composition according to the invention comprises:
- from 30 to 60 parts by mass of the silyl-modified polymer (A);
- from 0.2 to 3 parts by mass of the organofunctional silane compound (B); and
- from 20 to 50 parts by mass of the flame retardant component (C).

Preferably, the moisture curable composition may further comprise from 0.01 to 1 parts by mass of the curing catalyst (D).

### Other additives

The moisture curable composition according to the invention may further comprise at least one additive selected from the group consisting of solvents, pigments, dyes, adhesion promoters, drying agents, molecular sieves, antioxidant, wetting-agents, UV absorber, reactive diluent, thixotropic agents, fillers, plasticizers, and mixtures thereof.

The total content of other additives may range from 0 to 50% by mass, preferably from 0 to 25% by mass, more preferably from 0 to 10% by mass relative to the total of the moisture curable composition.

### Use

The invention also relates to the use of the moisture curable composition as described above, as a sealant (sealing, caulk), as an adhesive for bonding two substrates together, or as a coating on a surface of a substrate.

According to an embodiment, the moisture curable composition according to the invention is used as a sealant, an adhesive or a coating for the transport or construction industry, in particular for the equipment of trains or automobiles.

The moisture curable composition according to the invention may be coated or applied with a variety of application techniques known in the art, which include contact type application (such as slot die coating) and non-contact type application (such as spraying or fiberization).

The moisture curable composition according to the invention may be applied to a surface, for example at a temperature ranging from 5 to 50°C. The composition may cure (crosslink) under these conditions. For bonding two substrates, such coated surface may be put into contact with a surface of another substrate, so as to form an adhesive joint bonding the two substrates. The substrates may be different or of same nature, with various forms (layer or film, strands, fluff).

For example, the surface to be bonded or coated may comprise nonwoven fabric, tissue, rubber, paper, wood, composite material, plastics which may be elastomeric or non-elastomeric, metal or metal alloy, concrete, mortar, brick, tile, natural stone, glass, glass-ceramic, and any mixtures thereof. Preferably, the surface is a metal or metal alloy surface such as aluminum, or a plastic surface such as polyurethane, polyolefin, polypropylene (PP), polyethylene (PE), and polyethylene terephthalate (PET). For the use as an adhesive for bonding two substrates together, each substrate may be chosen independently from one another among the above-mentioned materials.

### Article

The invention also relates to an article comprising at least one layer obtained by curing the moisture curable composition according to the invention. The curing of the moisture curable composition is promoted by moisture, for example by atmospheric moisture. Such article may be assembled as a part in a train or automobile equipment.

### EXAMPLES

The following examples illustrate the invention without limiting it.

Compositions of examples 1-8 prepared according to Table 1 were applied as a 2 mm thickness layer on Teflon^{®} mold and left to cure at 23°C and 50% relative humidity (RH) for 5 days. The samples were then cut into Type I dumbbells according to the ISO37 standard and clipped on a universal testing machine (UTM) available from Instron for dumbbell tensile strength test. The modulus was read from a tensile test stress-strain curve as a slope of chord line of 5%-10% strain. The results are shown in Table 1.

**Table 1**

| **Component** | **Raw Material** | **1** | **2** | **3** | **4** | **5** | **6** | **7** | **8** |
|---|---|---|---|---|---|---|---|---|---|
| Silyl-modified polymer (A) (g) | SAX^{®}725 | 50 | 50 | 50 | 50 | 50 | 50 | 35 | 35 |
| | SILQUEST^{®} 1012LM | - | - | - | - | - | - | 15 | 15 |
| Organofunctional silane (B) (g) | DYNASYLAN^{®} AMMO | 2 | - | - | - | - | - | 2 | - |
| | DYNASYLAN ^{®} DAMO | - | 2 | - | - | - | - | - | - |
| | DYNASYLAN ^{®} TRIAMO | - | - | 2 | 2 | 2 | 2 | - | 2 |
| Flame retardant (C) (g) | PAPP | 40 | 40 | 40 | - | 32 | 32 | 32 | 32 |
| | MPP | - | - | - | 40 | 8 | - | | - |
| | ZnO | - | - | - | - | - | 8 | 8 | 8 |
| Catalyst (D) (g) | NEOSTANN^{®} S-1 | 0.5 | 0.5 | 0.5 | 0.5 | 0.5 | 0.5 | 0.5 | 0.5 |
| Performance | Modulus(10%) | 3.3 | 3.7 | 4.9 | 5.9 | 4.7 | 4.5 | 1.7 | 3.4 |
| | Ol(%) | 39.3 | 37.9 | 36.7 | 29.2 | 34.5 | 33.8 | 30.9 | 30.7 |

The modulus reflects the stiffness of a material itself. The higher modulus means the higher crosslinking density of the polymer matrix. In these examples, the modulus was used to monitor the crosslinking density of the prepared compositions.

The oxygen index (OI), also called the limiting oxygen index (LOI) or critical oxygen index (COI) is a parameter which describes the tendency of a material to sustain a flame, and is commonly used to characterize the flammability of a material. The oxygen index is defined as: OI = O₂ / (O₂ + N₂), where O₂ and N₂ are the minimum oxygen and nitrogen concentrations in the inflow gases required to pass the minimum burning length criterion. The unit of oxygen index is percentage, %.

Since air comprises about 20.95% oxygen by volume, any material with an oxygen index less than 20.95% will burn easily in air. Conversely, the burning behavior and tendency to propagate flame for a material with a limiting oxygen index greater than 20.95% will be reduced or even zero after removal of the igniting source. Higher OI values represent better flame retardancy. OI values can be measured according to any testing method, including specimen preparation and measurement, designated in the standards such as ASTM D2863, ISO 4589-2, and NES 714.

As can be seen from Table 1 above, all examples are found to provide sufficiently a high OI over 29%.

As for the modulus, examples 1-6 show that the combination of the silyl-modified polymer (A), the organofunctional silane compound (B) and the flame retardant component (C) overcame the slow-curing problem and maintained the mechanical properties of the composition.

Example 8 specifically shows that TRIAMO effectively improved the stiffness of the composition compared to example 7 with AMMO.

## Claims

1. A moisture curable composition, comprising:
- at least one silyl-modified polymer (A);
- at least one organofunctional silane compound (B) possessing at least one amino group and a hydrolysable silyl group; and
- at least one flame retardant component (C) comprising a halogen-free nitrogen-phosphorous flame retardant.

2. The moisture curable composition according to claim 1 comprising,
- from 30 to 60 parts by mass of the silyl-modified polymer (A);
- from 0.2 to 3 parts by mass of the organofunctional silane compound (B); and
- from 20 to 50 parts by mass of the flame retardant component (C).

3. The moisture curable composition according to claim 1 or 2, wherein the halogen-free nitrogen-phosphorous flame retardant comprises one or more selected from piperazine polyphosphate (PAPP), piperazine phosphate, melamine polyphosphate (MPP), melamine cyanurate (MCA), and ammonium polyphosphate (APP), preferably, the halogen-free nitrogen-phosphorous flame retardant comprises PAPP.

4. The moisture curable composition according to any one of claims 1 to 3, wherein the flame retardant component (C) comprises from 25 to 100% by mass of piperazine polyphosphate (PAPP) and 0 to 75% by mass of at least one flame retardant other than PAPP based on the total weight of the flame retardant component (C).

5. The moisture curable composition according to claim 4, wherein the at least one flame retardant other than PAPP is a nitrogen-phosphorous flame retardant, a nitrogen flame retardant, phosphorous flame retardant, a metal oxide flame retardant, a metal hydroxide flame retardant, or a combination thereof.

6. The moisture curable composition according to any one of claims 1 to 5, wherein PAPP comprises piperazine pyrophosphate.

7. The moisture curable composition according to any one of claims 1 to 6, wherein the organofunctional silane compound (B) possesses two or more amino groups.

8. The moisture curable composition according to any one of claims 1 to 7, wherein the hydrolysable silyl group of the organofunctional silane compound (B) is of formula -SiXYZ wherein X, Y and Z are independently selected from hydrogen, C₁-C₈ alkyl groups, and C₁-C₈ alkoxy groups, at least one of X, Y and Z being a hydrolysable group.

9. The moisture curable composition according to claim 8, wherein the hydrolysable group for at least one of X, Y, and Z is a C₁ to C₈ alkoxy group.

10. The moisture curable composition according to claim 8 or 9, wherein the organofunctional silane compound (B) is of formula XYZSi-A-NH-(B-NH)_{z}-H, z being an integer from 0 to 4 and A and B being alkyl divalent radicals.

11. The moisture curable composition according to claims 10, wherein the organofunctional silane compound (B) comprises an aminoalkylalkoxysilane selected from the group consisting of:
3-(trimethoxysilyl)propylamine having the following formula: 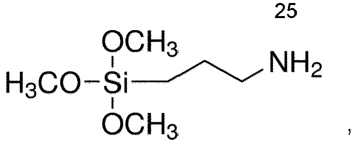
[3-(2-aminoethylamino)propyl]trimethoxysilane having the following formula: 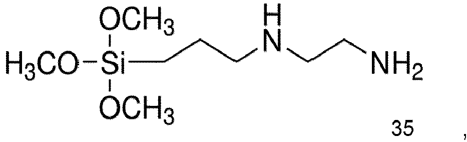 and
3-[2-(2-aminoethylamino)ethylamino]propyltrimethoxysilane having the following formula:

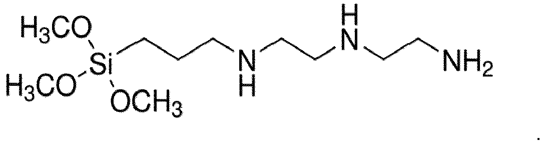

12. The moisture curable composition according to any one of claims 1 to 11, wherein the silyl-modified polymer (A) comprises one or more selected from a silyl-modified polyether and a silyl-modified polyurethane.

13. The moisture curable composition according to any one of claims 1 to 12, further comprising a curing catalyst (D).

14. The use of the moisture curable composition according to any one of claims 1 to 13, as a sealant, as an adhesive for bonding two substrates together, or as a coating on a surface of a substrate.

15. An article comprising at least one layer obtained by curing the moisture curable composition according to any one of claims 1 to 13.
